# EUROPÄISCHE PATENTSCHRIFT

(11) **EP 2 411 219 B1**
(45) Veröffentlichungstag und Bekanntmachung des Hinweises auf die Patenterteilung: **26.08.2015**
(21) Anmeldenummer: 10710231.1
(22) Anmeldetag: 20.03.2010
(51) Int. Cl.: B32B 27/00

(54) **LAMINATE ENTHALTEND HARTE, PLATTENFÖRMIGE MINERALIEN**
LAMINATES CONTAINING RIGID, PLATE-SHAPED MINERALS
STRATIFIÉS CONTENANT DES MINÉRAUX DURS SOUS FORME DE PLAQUES

(30) Priorität: 24.03.2009 DE 102009014638
(43) Veröffentlichungstag der Anmeldung: 01.02.2012
(73) Patentinhaber: Clariant Finance (BVI) Limited, Road Town, Tortola (VG)
(72) Erfinder: ROESCH, Norbert, 86368 Gersthofen (DE)
(74) Vertreter: Ricker, Mathias
(86) Internationale Anmeldenummer: PCT/EP2010/001754
(87) Internationale Veröffentlichungsnummer: WO 2010/108633

(56) Entgegenhaltungen:
- WO-A1-2007/042258
- WO-A2-2005/080096
- DE-A1- 19 903 912

## Beschreibung

Als Laminat wird ein mehrlagiger, duroplastischer Kunststoff bezeichnet, der durch Verpressen und Verkleben mindestens zweier Lagen gleicher oder verschiedener Materialien entsteht. Durch Kombination können sich die Eigenschaften der Einzelmaterialien ergänzen.

Übliche Schichtstoffe sind ca. 0,5 bis 1,2 mm dick und werden in der Weiterverarbeitung meist mit einem Spezialkleber auf ein Trägermaterial (z. B. HDF- oder Spanplatten) aufgezogen. Häufigste Einsatzart für solche Laminatbeschichtungen ist der Laminatboden und Küchenarbeitsplatten. Es lassen sich aber auch Laminate mit Dicken von 2 bis 20 cm problemlos herstellen. Solche als Compact-Laminate bezeichneten Produkte sind mit zunehmender Dicke selbst tragend und finden z. B. im Innenausbau aber auch im Außeneinsatz als Fassaden- oder Balkonverkleidung Verwendung. Laminat hat viele positive Eigenschaften: die Oberfläche ist dicht, schlag- und abriebresistent. Sie kann mit verschiedenen Strukturen versehen werden und hält auch hohen Temperaturen kurzzeitig stand, ohne Schaden zu nehmen. Die Oberfläche ist leicht zu pflegen und zu reinigen, hitze- und lichtbeständig sowie geruchsneutral und unempfindlich gegen Alkohol bzw. organische Lösemittel sowie der Einwirkung von Wasserdampf.

Um eine Laminatplatte zu erhalten, werden mehrere harzgetränkte Papiere unter Druck und Temperatur miteinander verpresst. Als Harze werden MelaminFormaldehyd-, Phenol-Formaldehyd-, Harnstoff-Formaldehydharze und Kombinationen dieser Stoffe verwendet. Für einen hochwertigen dekorativen Schichtstoff, wie er z. B. bei Laminatböden zum Einsatz kommt, werden folgende Schichten verwendet: Der Kern besteht aus mehreren Phenolharz-getränkten Papieren, darüber liegt die mit Melaminharz imprägnierte Dekorschicht. An oberster Stelle wird ein sog. Overlay verpresst, das aus zwei durchsichtigen Melaminharz-getränkten Papieren besteht, zwischen denen eine Korundschicht aus Grobkorund (> 20 µm) eingeschlossen sein kann. Es ist auch die Anwendung von mit Korund gefüllten Overlays möglich. Auf der Unterseite wird ein Gegenzug eingesetzt, der ein Verbiegen des fertigen Werkstoffes verringert. Der grobe Korund hat die Aufgabe, das Dekor gegen Abrieb zu schützen und bringt die erforderliche Stabilität. Eine Erhöhung der Kratzfestigkeit wird damit jedoch kaum erreicht.

Bei mehrschichtigem Aufbau wird meist noch mit einer Abschlussschicht gearbeitet, die zum Schutz der Pressbleche und Vermeidung von Rauhigkeit der Nutzfläche nicht mit Korund ausgerüstet ist. Außerdem würde grober Korund beim Verpressen der Laminate sedimentieren. Das Abschluss-overlay ist deshalb in ungeschützter Form täglichen Zerkratzungen ausgesetzt.

WO 2007/042258 offenbart eine Platte mit dekorativer Oberfläche und einer darauf aufgebrachten Lackschicht, die abriebfeste Partikel enthält. Die abriebfesten Partikel können aus Korund bestehen und einen mittleren Durchmesser von beispielsweise 10 bis 60 µm aufweisen.

WO 2005/080096 offenbart Papier mit einer abriebfesten Beschichtung, wobei Fasern auf oder an der abriebfesten Beschichtung angebracht sind. Die entsprechenden abriebfesten Partikel können einen Durchmesser von beispielsweise 50 bis 200 µm aufweisen und aus Korund bestehen.

DE 199 03 912 offenbart ein spezielles Verfahren zur Herstellung eines mehrschichtigen Laminates. Auf dem Laminatträger kann ein Overlay aufgebracht sein, welches eine abriebfeste Schicht aufweist. Die abriebfeste Schicht kann als abriebfestes Material Korund mit einer Korngröße zwischen 1 und 80 µm enthalten.

In der WO 2008/101621 wird die Kratzempfindlichkeit des Overlays durch Einarbeitung von Metalloxid-Nanopartikeln vermindert. Trotzdem besteht der Wunsch nach einer deutlichen Steigerung der Kratzunempfindlichkeit im Overlay von Laminatplatten.

Diese Aufgabe konnte überraschenderweise durch Einarbeitung von plättchenförmigem, einkristallinem Korund in den Overlay einer Laminatplatte gelöst werden.

Gegenstand der Erfindung sind deshalb Laminate enthaltend im Overlay plattenförmige, einkristalline Partikel aus Aluminiumoxid, die ein Korundkristallgitter aufweisen. Bevorzugte Partikel, die erfindungsgemäß eingesetzt werden, haben einen mittleren Durchmesser im Bereich von 1 bis 50 Mikrometer, vorzugsweise 2 bis 20 Mikrometer, bei einer Dicke von 50 bis 500 nm. Das Aspektverhältnis (Verhältnis Durchmesser:Dicke) liegt zwischen 1:10 und 1:100, vorzugsweise zwischen 1: 20 und 1:100, insbesondere zwischen 1:30 und 1:100, ganz besonders bevorzugt zwischen 1:50 und 1:100.

Jedes Plättchen stellt einen Korund-Einkristall dar, der für sichtbares Licht voll durchlässig ist.

Es kann auch vorteilhaft sein, die erfindungsgemäßen Korund-Plättchen mit Nanopartikeln aus Aluminiumoxid zu mischen, deren Feinheit im nm-Bereich, bevorzugt < 200 nm, liegt. Mit den Nanopartikeln können Lücken zwischen den

Plättchen gefüllt werden. Die Mischungsverhältnisse Nanokorund / Plättchen-Korund können dabei beliebig sein.

Weiterhin besteht die Möglichkeit, sphärischen Grobkorund (Teilchengröße von 10 bis 100 µm), der üblicherweise zur Verbesserung der Abriebfestigkeit eingesetzt wird, mit den erfindungsgemäßen Korund-Plättchen zu kombinieren. Bei dieser Kombination erhält man Laminate mit verbesserter Kratzfestigkeit und verbesserter Abriebfestigkeit.

Der Grobkorund, der plättchenförmige Korund oder die Kombination davon können in einer Menge von 1 bis 20 g/m² eingesetzt werden. Es sind dabei je nach gewünschter Abrieb- und Kratzfestigkeit beliebige Mischungsverhältnisse anwendbar.

Die Herstellung von plattenförmigem Aluminiumoxid ist an sich bekannt und beispielsweise in der irischen Patentanmeldung IE 903320 ausführlich beschrieben. Hierbei wird Aluminiumhydroxid in Gegenwart von anorganischen Fluoriden, wie z.B. LiF, NaF, KF oder CaF₂, bei Temperaturen zwischen 900 und 1.100 °C calziniert.

Die Herstellung kann auch gemäß der WO 2004/060804 A1 durchgeführt werden, wobei Aluminiumhydroxid in einer Salzmatrix, z. B. in NaCl oder Na₂SO₄, calziniert wird, die anisotropes Wachstum fördert.

Das erfindungsgemäß verwendete plättchenförmige Aluminiumoxid kann reines Korund oder dotiertes Korund sein. Zur Dotierung kommen alle Metalle in Frage, die die Ausbildung einer Plättchenform des hexagonalen Kristallgitters der Korundphase nicht stören, wie z. B. Elemente der II. Hauptgruppe des Periodensystems der Chemischen Elemente, Silizium, Eisen, Cobalt, Nickel, Kupfer, Zink, Zirkonium, Titan, Chrom, Mangan, und Lanthaniden-Elemente. Die Gehalte an Dotierstoff sind dabei kleiner als 10 Gew.-%, insbesondere 0,0001 bis 5 Gew.-%.

In den nachfolgenden Ausführungen wird unter "plättchenförmigem Aluminiumoxid" sowohl reines als auch dotiertes Korund in Plättchenform verstanden.

Gegenstand der Erfindung ist auch ein Verfahren zur Herstellung der erfindungsgemäßen Laminate, dadurch gekennzeichnet, dass man plättchenförmiges Aluminiumoxid, das ein Korundkristallgitter aufweist, mit einer Tränkharz-Lösung vermischt, mit dieser Mischung ein Papier oder ein textiles Gewebe, vorzugsweise ein Dekorpapier, im Top-coat-overlay imprägniert und das imprägnierte Papier oder textile Gewebe in einer Heißpresse auf eine Trägerplatte aufbringt.

Der Anteil an plättchenförmigem Aluminiumoxid, bezogen auf festes Tränkharz beträgt zweckmäßigerweise 1 bis 10 Gew.-%. Bei üblichen Schichtdicken von 10 bis 50 µm Overlay-Schicht entspricht dies einem Mineralanteil von 1 bis 20 g/m².

Als Tränkharze kommen vorzugsweise Formaldehyd-Melamin-Harze, Formaldehyd-Harnstoff-Harze, Formaldehyd-Phenol-Harze und Kombinationen dieser Harze zum Einsatz. Die Harze sind üblicherweise in Wasser gelöst, und können weitere übliche Zusatzstoffe, wie Härter und Verlaufsmittel, enthalten.

Zweckmäßigerweise geht man so vor, dass das Papier oder textile Gewebe ein- oder mehrmals unter Zwischentrocknung durch ein eine Tränkharz-Lösung enthaltendes Bad hindurchgezogen wird (Base-coat-overlay), bevor die erfindungsgemäße Top-coat-overlay-Imprägnierung stattfindet. Zur Verbesserung der Abriebfestigkeit kann dieser Tränkharz-Lösung ein sphärischer Grobkorund zugesetzt sein, zweckmäßigerweise in einer Menge von 1 bis 10 Gew.-%, bezogen auf festes Tränkharz. Die Top-coat-Imprägnierung kann durch Eintauchen in ein weiteres Bad, das die erfindungsgemäßen plättchenförmigen Aluminiumoxid-Partikel enthält, stattfinden oder durch Besprühen mit einer entsprechenden flüssigen Mischung. Es ist auch möglich, das Papier oder textile Gewebe ein- oder mehrfach nur mit der Flotte, die die erfindungsgemäßen plättchenförmigen Aluminiumoxid-Partikel enthält, zu imprägnieren.

Die Heißpresse arbeitet in der Regel bei einer Temperatur zwischen 100 und 180 °C und einem Druck zwischen 80 und 200 bar.

Die Tränkharz-Lösung hat meist eine Harzkonzentration zwischen 30 und 70 Gew.-%, bevorzugt zwischen 40 und 60 Gew.-%.

In einer alternativen Arbeitsweise wird ein sogenanntes Overlay-Papier verwendet, das bereits mit Harz getränkt ist und die erfindungsgemäßen plättchenförmigen Aluminiumoxid-Partikel und gegebenenfalls sphärischen Grobkorund in der Papiermasse enthält. Dieses Overlay-Papier wird dann auf das Dekorpapier gelegt und ebenfalls in einer Heißpresse auf die Trägerplatte aufgebracht.

Es ist auch denkbar, als Overlay UV-Lacke einzusetzen, die den plättchenförmigen Korund enthalten.

Die erfindungsgemäßen Laminate können darüber hinaus noch weitere Zusatzstoffe enthalten, wie sie in der Lacktechnik üblich sind, beispielsweise Reaktivverdünner, Lösemittel und Colöser, Wachse, Mattierungsmittel, Gleitmittel, Entschäumer, Entlüfter, Verlaufmittel, Thixotropiermittel, Verdickter, anorganische und organische Pigmente, Füllstoffe, Haftvermittler, UV-Stabilisatoren, HALS-Verbindungen, Radikalfänger, Antistatika, Netzmittel und Dispergiermittel und/oder die je nach Art der Härtung notwendigen Katalysatoren, Cokatalysatoren, Initiatoren, Radikalbildnern, Photoinitiatoren, Photosensibilisatoren. Als weitere Zusatzstoffe kommen auch Polyethylenglykol und andere Wasserretentionsmittel, PE-Wachse, PTFE-Wachse, PP-Wachse, Amidwachse, FT-Paraffine, Montanwachse, gepfropfte Wachse, natürliche Wachse, makro- und mikrokristalline Paraffine, polare Polyolefinwachse, Sorbitanester, Polyamide, Polyolefine, PTFE, Netzmittel oder Silikate in Frage.

In den nachfolgenden Beispielen bedeuten Prozente Gewichtsprozente.

### Beispiel 1

Es werden plättchenförmige Korundpartikel von 1 bis 30 Mikrometer im Durchmesser und einer Dicke von 50 bis 200 nm, Aspektverhältnis ca.1:90, analog Beispiel 5 der WO 2004/060804 A1 hergestellt.

Die Korund-Plättchen wurden einem wässrigen Tränkharz (8 % Korundplättchen bezogen auf festes Kauramin^{®} 773, BASF, ca. 50 %ige Harzlösung) zusammen mit Härter und Verlaufsmittel beigemischt und die Mischung verwendet, um bedrucktes schwarzes Dekopapier zu beschichten. Es wurde mit dieser Flotte zweifach imprägniert und jeweils im Trockenschrank bei 120 °C vorkondensiert. Nach Trocknung der Imprägnierung erfolgte die Laminierung des Dekopapiers auf Trägerplatten ((40 x 40 cm, HD-Trägerplatten mit 5 mm Dicke) in einer Heißpresse bei 160 °C und einem Druck von 200 bar. Die Pressdauer betrug 4 min.

### Vergleichsbeispiel 1 (ohne Mineralzusatz):

Es wurde wie in Beispiel 1 verfahren, jedoch ohne Korund-Plättchen im Tränkharz.

### Vergleichsbeispiel 2 (Nanokorund)

Anstelle von plättchenförmigem Korund wurde Nanokorund mit einem d₉₀ von 120 nm, hergestellt gemäß DE-A-102007008468, 8 %ig in das in Beispiel 1 genannte Tränkharz eingearbeitet. Die Herstellung des Dekopapiers und die Laminierung erfolgte ebenfalls wie in Beispiel 1.

### Vergleichsbeispiel 3 (Grobkorund):

Anstelle von plättchenförmigem Korund wurde sphärischer Grobkorund mit einem d₉₀ von 80 µm, 8 %ig in das in Beispiel 1 genannte Tränkharz eingearbeitet. Die mit Grobkorund ausgerüstete Flotte kam nur bei der 1. Imprägnierung zum Einsatz. Die 2. Imprägnierung wurde mit Kauramin ohne Korund durchgeführt. Die Herstellung des Dekopapiers und die Laminierung erfolgte ebenfalls wie in Beispiel 1.

Die fertigen Laminatstücke wurden jeweils mit einem Kratztester auf ihre Kratzfestigkeit hin überprüft. Es kam das Scotch-brite pad Nr. 96 mit einer Auflagekraft von 5 N (0,5 kg Gewicht) zum Einsatz. Die Bewegung des Pads erfolgte linear bei 200 Hüben. Gemessen wurde nach jeweils 50 Hüben der Glanzabfall, verursacht durch die auftretenden Kratzer mit dem Glanzmessgerät MICRO-TRI-GLOSS µ (BYK Gardner).

Die Korund-Partikel selbst verursachen durch ihre hohe Transparenz keine Beeinträchtigung der optischen Eigenschaften.

Die Tabelle zeigt den entsprechenden Restglanz nach 200 Hüben (Zerkratzungen):

| Beispiel: | Beispiel 1 | Vgl. bsp. 1 | Vgl.bsp. 2 | Vgl.bsp. 3 |
|---|---|---|---|---|
| Morphologie: | Platelets | ohne Mineral | Nanopartikel | Grobkorund |
| rel. Restglanz [%]: | 90 | 40 | 72 | 62 |

Die Kratzfestigkeit konnte durch die erfindungsgemäßen Korund-Plättchen signifikant verbessert werden.

## Patentansprüche

1. Laminat enthaltend im Overlay plattenförmige, einkristalline Partikel aus Aluminiumoxid, die ein Korundkristallgitter aufweisen.

2. Laminat nach Anspruch 1, **dadurch gekennzeichnet, dass** die Partikel einen mittleren Durchmesser im Bereich von 1 bis 50 Mikrometer bei einer Dicke von 50 bis 500 nm haben.

3. Laminat nach Anspruch 1 oder 2, **dadurch gekennzeichnet, dass** die Partikel ein Aspektverhältnis zwischen 1:10 und 1:100 haben.

4. Laminat nach Anspruch 3, **dadurch gekennzeichnet, dass** das Aspektverhältnis der Partikel zwischen 1:50 und 1:100 liegt.

5. Laminat nach einem oder mehreren der Ansprüche 1 bis 4, **dadurch gekennzeichnet, dass** die Partikel mit Metallen dotiertes Korund sind.

6. Laminat nach einem oder mehreren der Ansprüche 1 bis 5, **dadurch gekennzeichnet, dass** die Partikel in einer Menge von 1 bis 20 g / m² im Overlay enthalten sind.

7. Laminat nach einem oder mehreren der Ansprüche 1 bis 6, **dadurch gekennzeichnet, dass** die plattenförmigen Partikel mit sphärischem Grobkorund einer Teilchengröße von 10 bis 100 µm kombiniert sind.

8. Verfahren zur Herstellung eines Laminats nach einem oder mehreren der Ansprüche 1 bis 7, **dadurch gekennzeichnet, dass** man plattenförmiges Aluminiumoxid, das ein Korundkristallgitter aufweist, mit einer Tränkharz-Lösung vermischt, mit dieser Mischung ein Papier oder ein textiles Gewebe, vorzugsweise ein Dekorpapier, im Top-coat-overlay imprägniert und das imprägnierte Papier oder textile Gewebe in einer Heißpresse auf eine Trägerplatte aufbringt.

9. Verfahren nach Anspruch 8, **dadurch gekennzeichnet, dass** das Papier oder textile Gewebe ein- oder mehrmals unter Zwischentrocknung durch ein eine Tränkharz-Lösung enthaltendes Bad hindurchgezogen wird und anschließend die Top-coat-overlay-Imprägnierung stattfindet.

10. Verfahren nach Anspruch 8 oder 9, **dadurch gekennzeichnet, dass** die Top-coat-overlay-Imprägnierung durch Eintauchen in ein Bad, das die plattenförmigen Aluminiumoxid-Partikel enthält, oder durch Besprühen mit einer flüssigen Mischung aus plattenförmigen Aluminiumoxid-Partikeln und Tränkharz-Lösung erfolgt.

11. Verfahren nach Anspruch 8, **dadurch gekennzeichnet, dass** die Top-coat-overlay-Imprägnierung mit einem Overlay-Papier erfolgt, das bereits mit Harz getränkt ist und die plattenförmigen Aluminiumoxid-Partikel und gegebenenfalls sphärischen Grobkorund in der Papiermasse enthält, indem das Overlay-Papier auf das Papier oder textile Gewebe, vorzugsweise Dekorpapier, gelegt und in einer Heißpresse auf die Trägerplatte aufgebracht wird.

## Claims

1. A laminate containing in the overlay plate-shaped, monocrystalline particles of aluminum oxide comprising a corundum crystalline lattice.

2. The laminate as claimed in claim 1, **characterized in that** the particles have a mean diameter in the range of 1 to 50 micrometers with a thickness of 50 to 500 nm.

3. The laminate as claimed in claim 1 or 2, **characterized in that** the particles have an aspect ratio between 1:10 and 1:100.

4. The laminate as claimed in claim 3, **characterized in that** the aspect ratio of the particles is between 1:50 and 1:100.

5. The laminate as claimed in one or more of claims 1 to 4, **characterized in that** the particles are corundum doped with metals.

6. The laminate as claimed in one or more of claims 1 to 5, **characterized in that** the particles are contained in the overlay in an amount of from 1 to 20 g/m².

7. The laminate as claimed in one or more of claims 1 to 6, **characterized in that** the plate-shaped particles are combined with spherical coarse corundum having a particle size of 10 to 100 µm.

8. A method for producing a laminate as claimed in one or more of claims 1 to 7, **characterized in that** plate-shaped aluminum oxide, which comprises a corundum crystalline lattice, is mixed with an impregnating resin solution, a paper or a textile woven fabric, preferably a decorative paper, is impregnated in the top-coat overlay with this mixture, and the impregnated paper or textile woven fabric is applied to a carrier plate in a hot press.

9. The method as claimed in claim 8, **characterized in that** the paper or textile woven fabric is passed through a bath containing an impregnating resin solution one or more times with intermediate drying and the top-coat overlay is then impregnated.

10. The method as claimed in claim 8 or 9, **characterized in that** the top-coat overlay is impregnated by dipping in a bath which contains the plate-shaped aluminum oxide particles, or by spraying with a liquid mixture of plate-shaped aluminum oxide particles and impregnating resin solution.

11. The method as claimed in claim 8, **characterized in that** the top-coat overlay is impregnated with an overlay paper, which is already impregnated with resin and contains the plate-shaped aluminum oxide particles and optionally spherical coarse corundum in the paper mass, by laying the overlay paper on the paper or textile woven fabric, preferably decorative paper, and by applying to the carrier plate in a hot press.

## Revendications

1. Stratifié contenant, sous forme de lamelles de couverture, des particules monocristallines d'oxyde d'aluminium comprenant un réseau cristallin de corindon.

2. Stratifié selon la revendication 1, **caractérisé en ce que** les particules ont un diamètre moyen dans la plage de 1 à 50 micromètres avec une épaisseur de 50 à 500 nm.

3. Stratifié selon la revendication 1 ou 2, **caractérisé en ce que** les particules ont un facteur de forme compris entre 1:10 et 1:100.

4. Stratifié selon la revendication 3, **caractérisé en ce que** le facteur de forme des particules est compris entre 1:50 et 1:100.

5. Stratifié selon une ou plusieurs des revendications 1 à 4, **caractérisé en ce que** les particules sont du corindon dopé avec des métaux.

6. Stratifié selon une ou plusieurs des revendications 1 à 5, **caractérisé en ce que** les particules sont contenues dans la couverture en une quantité de 1 à 20 g/m².

7. Stratifié selon une ou plusieurs des revendications 1 à 6, **caractérisé en ce que** les particules en forme de lamelles sont combinées avec du corindon grossier sphérique ayant une taille de particule de 10 à 100 µm.

8. Procédé de production d'un stratifié selon une ou plusieurs des revendications 1 à 7, **caractérisé en ce que** l'oxyde d'aluminium en forme de lamelles, qui comprend un réseau cristallin de corindon, est mélangé avec une solution de résine d'imprégnation, un papier ou un tissu tissé textile, de préférence un papier décoratif, est imprégné dans la couverture de couche supérieure avec ce mélange, et le papier ou tissu tissé textile imprégné est appliqué sur une plaque de support dans une presse à chaud.

9. Procédé selon la revendication 8, **caractérisé en ce que** le papier ou tissu tissé textile est passé à travers un bain contenant une solution de résine d'imprégnation une ou plusieurs fois avec un séchage intermédiaire et la couverture de couche supérieure est ensuite imprégnée.

10. Procédé selon la revendication 8 ou 9, **caractérisé en ce que** la couverture de couche supérieure est imprégnée par immersion dans un bain qui contient les particules d'oxyde d'aluminium en forme de lamelles, ou par pulvérisation avec un mélange liquide de particules d'oxyde d'aluminium en forme de lamelles et de solution de résine d'imprégnation.

11. Procédé selon la revendication 8, **caractérisé en ce que** la couverture de couche supérieure est imprégnée avec un papier de couverture, qui est déjà imprégné avec une résine et contient les particules d'oxyde d'aluminium en forme de lamelles et facultativement du corindon grossier sphérique dans la masse de papier, par application du papier de couverture sur le papier ou tissu tissé textile, de préférence un papier décoratif, et par application sur la plaque de support dans une presse à chaud.
